# EUROPEAN PATENT APPLICATION

(11) **EP 3 048 573 A1**
(43) Date of publication of application: **27.07.2016**
(21) Application number: 16150263.8
(22) Date of filing: 05.01.2016
(51) Int. Cl.: G06Q 30/02

(54) **AN AGENT-BASED DEMAND PREDICTION SYSTEM FOR GENERATING WEATHER-DEPENDENT PRODUCT DEMAND PREDICTIONS**

(30) Priority: 22.01.2015 GB 201501096
(71) Applicant: FUJITSU LIMITED, Kawasaki-shi Kanagawa 211-8588 (JP)
(72) Inventor: WALKER, Brent, Ealing, Greater London W13 8AB (GB); LI, Michael, Hayes, Middlesex UB3 2PP (GB); BHASKARAN, Balakrishnan, Exeter, Devon EX1 3GF (GB)
(74) Representative: Wilding, Frances Ward

(57) **Abstract**

An agent-based demand prediction system for generating weather-dependent product demand predictions using agent-based modelling in which the clients for the product are the agents, the system comprising:
an analytics module arranged to select and/or generate agent behaviour rules based on historical data relating to weather-dependent product acquisition by client agents;
a weather module arranged to acquire weather forecasts in real time and to access pre-defined weather event rules; and
an agent-based simulation module arranged to use the agent behaviour rules and weather forecasts to simulate agent behaviour and generate product demand predictions; wherein
the weather module is arranged to compare the acquired weather forecasts with the pre-defined weather event rules, and trigger a simulation in the agent-based simulation module based on a match between an acquired weather forecast and a predefined weather event rule.

## Description

This invention relates to the practical use of demand prediction in any manufacturing and/or distribution industry. Demand prediction is a challenging problem for manufacturing and distribution industries. The aim of demand prediction is to allow the manufacturer to produce the appropriate quantity and type of goods required at a particular time, and have them to be dispatched to the locations they are required in sufficient time. A producer may desire high quality demand predictions to avoid over-and under-production and storage for a range of reasons, which may include:
- No profit is expected from a non-sale, so producing the correct number of units to dispatch when and where there is demand is crucial.
- If competing manufacturers have made incorrect production decisions, the organization may want to be in a position to pick up their business.
- Cost of carry: Storage of unsold goods has associated costs.
- Wastage: Over-production of goods may lead to wastage if the goods will not end up being sold at a later date and cannot be reused or recycled.
- Reputation and ongoing business may be damaged if the producer is unable to fulfil demand when required.

Demand for many goods is weather-dependent, with both hot and cold weather being potentially important. Furthermore, weather considerations are relevant across a spectrum of products, ranging from the Fast Moving Consumer Group or FMCG space (e.g. food and beverages) to clothing and electrical goods (heating, cooling products).

Although the immediate issue may be the production step of the supply chain, players across the production and distribution network stand to benefit from the incorporation of accurate prediction of weather-dependent demand into supply chain, production, raw material supply and other operations across the manufacturing and distribution industry.

Weather prediction is currently used by some producers, e.g. electricity generators, as part of their demand prediction strategies. This could potentially be combined with other business information, e.g. macroeconomic conditions, customer surveys, etc. to derive predictions.

The inventors have come to the realisation that better weather-dependent demand prediction and hence closer adaptation of the manufacturing and/or supply chain to demand can be provided by agent-based modelling.

An agent-based model (ABM) (also sometimes related to the term multi-agent system or multi-agent simulation) is a computational model for simulating the actions and interactions of autonomous agents with a view to assessing their effects on the system as a whole. In many models, each agent is an individual (person). In order to simulate the individual's behaviour, the individual is given attributes, such as rule-based reactions to stimuli.

According to one embodiment of an aspect of the invention there is provided an agent-based demand prediction system for generating weather-dependent product demand predictions using agent-based modelling in which the clients for the product are the agents, the system comprising: an analytics module arranged to select and/or generate agent behaviour rules based on historical data relating to weather-dependent product acquisition by client agents; a weather module arranged to acquire weather forecasts in real time and to access pre-defined weather event rules; and an agent-based simulation module arranged to use the agent behaviour rules and weather forecasts to simulate agent behaviour and generate product demand predictions; wherein the weather module is arranged to compare the acquired weather forecasts with the pre-defined weather event rules, and trigger a simulation in the agent-based simulation module based on a match between an acquired weather forecast and a pre-defined weather event rule.

The definition above applies specifically to tangible (3D) products, but the same functionality applies equally to services, which are considered herein as included within the definition of a product.

Prediction for a weather dependent service will work the same way as the prediction for a weather dependent product. For example:
In case of frost/ice formation on the road, the weather dependent demand for:
   1)The product: the demand for the salt to spread on the road is weather dependent
   2)The service: Mobilising resources at the right time and location to have the salt spread by the contractor.

The question to be answered is how to improve the prediction of weather-dependent demand. The approach of this embodiment is to combine accurate weather predictions with on-demand simulation of the characteristics of client populations, preferably incorporating accumulated historical sales data held by a producer organization.

Although high quality medium-range (i.e. 3-16 days) weather forecasts are readily available, only using weather prediction for demand-forecasting is unlikely to be accurate enough in a modern production decision strategy, as inclusion of the stakeholders as a *population* is crucial.

Embodiments of the invention can address in a single system the following issues:
- Clients (and potentially also clients in different regions) have different characteristics, so the client population should be modelled as a group of individuals.
- Historical sales data should be used advantageously.
- The system may need to respond to external drivers, in particular, real-time weather predictions, especially for individual "extreme" weather events.
- Advantageously, when the system is running, new information comparing predicted orders and actual orders could be incorporated to improve the system.

Prior systems have not incorporated together the following three key aspects in a weather-dependent demand prediction system:
1. Availability of high quality numerical weather forecasts (with sufficient lead-time to be useful to producers).
2. Detailed historical sales data. This can include regional sales data and its correlation with weather.
3. Behavioural simulation able to capture characteristic variations across a population at a sufficient level of maturity.

Embodiments of the invention allow simulation results in the form of product demand predictions to be fed to the relevant process in the manufacturing and/or distribution chain. For example, the simulation results may be used to update an order for the products (whether this is a product delivery order, a manufacturing order, or even an order for the raw materials which make up the product). The update may, for example, take the form of an adjustment to be made, or an absolute quantity. The more accurate demand prediction provided by invention embodiments is desirable at least for the reasons set out hereinbefore. Moreover, the use of the triggering functionality means that the order is only updated as necessary, saving unnecessary changes to the manufacturing and delivery schedule. Of course, the simulation result may be used to update more than one order, and in fact all the orders used for the manufacturing and delivery supply chain as a whole.

The system according invention embodiments may rely on rules developed from the operator's own historical sales figures, possibly facilitating incorporation of historical weather data. Additionally or alternatively it may further comprise an agent rule library of pre-existing agent rules from which the analytics module is arranged to select agent behaviour rules. Such an agent rule library preferably includes agent product acquisition behaviour which varies geographically. This more complex dataset can allow for more accurate prediction, whether a single geographical region or multiple geographical regions are taken into account.

In some embodiments, the agent rule library includes competitor agent rules based on historical data related to weather dependent behaviour of competitors for the operator and/or other entities in the supply chain. Here, there are two types of agent, client agents and competitor agents. The simulation may take into account interaction between agents, and between different types of agent. The simulation can take competitor agent rules (and the behaviour of competitor agents) into account.

The system may rely on individual rule weather event rules entered by the operator and additionally or alternatively may further comprise a weather event library of weather event rules accessed by the weather module. The weather event library can also include weather events rules which vary geographically.

The agent rule library and/or the weather event library can be divided by industry sector and/or product type and/or geographical region.

The system of invention embodiments focuses on weather. Additionally, in a system according to an invention embodiment, the agent-based simulation module may be arranged to use other upcoming event data as an input in the simulation. Also, the agent behaviour rules may include the effect of the other upcoming event on client (and competitor) agent behaviour.

A system according to invention embodiments may further including an operator interface such as a graphical user interface GUI, arranged to allow operator input in a set-up phase. In such a setup phase, the operator may be able to select pre-existing agent rules and/or enter operator historical demand data to train the analytics module and create new agent rules for use in an execution phase. In such an arrangement, the system can be arranged to automatically incorporate corresponding recorded weather conditions with the operator historical data.

The operator interface can alternatively or additionally be arranged to allow operator input to incorporate a simulation trigger, in a set-up phase in which the operator can optionally select pre-existing weather event rules and/or devise operator weather event rules.

The operator interface can be arranged to additionally allow input of client agent locations. Alternatively or additionally, the operator interface can be arranged to additionally allow entry of lead times for system operation, for example based on reliability of the weather forecasts used. Thus if a weather forecast is reliable, a system lead time might be 20 days, so that a simulation can be triggered for 20 days in advance with 20 days' time for the order at the manufacturer or supplier to be adjusted in dependence upon the result of the simulation.

Extending that example, one could argue that if the weather forecast is believed to be more uncertain, then the demand prediction simulations could be held until the minimum required threshold notice period. In both cases, subsequent simulations will help to refine/update the demand prediction (at a cost of shorter lead time).

In one arrangement, the system may be arranged to provided suggested lead times in dependence upon the source of the weather forecasts and any other relevant factors.

In one embodiment, the system can provide a monitoring phase, in which the weather module repeatedly monitors weather forecasts with the selected lead time, until the simulation is triggered (giving a simulation phase). The monitoring phase may follow the setup phase, in which the agent behaviour rules specific to the simulation and weather event rules are generated/input.

The analytics module may be arranged to update the agent behaviour rules based on a combination of recorded weather data and recorded demand data collected during system operation and compared with predicted product demand. For example, the agent behaviour rules may be updated during the monitoring and/or simulation phases.

The agent-based simulation module may be arranged to execute the triggered simulation once only, or on a periodic basis after it is first triggered. The further executions after the first time may use an updated weather forecast as an input in each subsequent execution.

The product demand predictions may be used for any suitable aspect of logistics in the entire supply chain. Preferably they are used to adjust orders and thus to change the rate of real time production and/or distribution of the product. More preferably, they are input (directly or indirectly) into logistics software to adjust the product supply within the logistics software.

According to an embodiment of a method aspect, there is provided an agent-based demand prediction method for generating weather-dependent product demand predictions using agent-based modelling in which the clients for the product are the agents, the method comprising: selecting and/or generating agent rules based on historical data relating to weather-dependent product acquisition by client agents; acquiring weather forecasts in real time and accessing pre-defined weather event rules; and using the agent rules and weather forecasts to simulate agent behaviour in an agent-based simulation module and generate product demand predictions; wherein the method further comprises comparing the acquired weather forecasts with the pre-defined weather event rules, and triggering a simulation in the agent-based simulation module based only on a match between an acquired weather forecast and a pre-defined weather event rule.

The system/apparatus may further include other components such as a graphical user interface GUI for the user to input data corresponding to different scenarios and output means, for example in the form of a screen for visualisation of the results and/or a printer to provide printed results. However, as set out above, the output is more likely to be in the form of an input directly to a logistics package for manufacturing and/or distribution, to set or adjust a requirement level for the product.

Features and sub features of any of these system/apparatus and method aspects may be freely combined. Thus for example, optional method features correspond to the optional apparatus features set out above.

The invention can be implemented in computer hardware, firmware, software, or in combinations of them. The invention can be implemented as a computer program or computer program product, i.e., a computer program tangibly embodied in an information carrier, e.g., in a machine-readable storage device or in a propagated signal, for execution by, or to control the operation of, one or more hardware modules. A computer program can be in the form of a computer program portion or more than one computer program and can be written in any form of programming language, including compiled or interpreted languages, and it can be deployed in any form, including as a stand-alone program or as a module, component, subroutine, or other unit suitable for use in a data processing environment. A computer program can be deployed to be executed on one module or on multiple modules at one site or distributed across multiple sites and interconnected by a communication network.

Method steps of the invention can be performed by one or more programmable processors executing a computer program to perform functions of the invention by operating on input data and generating output. Each processor may have one or more cores. The method steps can be executed by a cluster of computers, each having one or more processors.

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The invention is described in terms of particular embodiments. Other embodiments are within the scope of the following claims. For example, the steps of the invention can be performed in a different order and still achieve desirable results.

The apparatus according to preferred embodiments is described as configured or arranged to carry out certain functions. This configuration or arrangement could be by use of hardware or middleware or any other suitable system. In preferred embodiments, the configuration or arrangement is by software.

According to a further aspect there is provided a program which when loaded onto a computing apparatus configures the computing apparatus to carry out the method steps according to any of the preceding method definitions or any combination thereof. Elements of the invention have been described using the term "module". The skilled person will appreciate that this term and its equivalents may refer to parts of the apparatus that are spatially separate but combine to serve the function defined. Equally, the same physical parts of the apparatus may provide two or more of the modules defined.

The invention will now be described with reference to specific non-limiting embodiments as shown in the drawings, in which:
Figure 1 is a high level comparison of the prior art and the functionality of an invention embodiment;
Figure 2 is a schematic overview of a general system according to invention embodiments;
Figure 3 is a view of the major modules and data flows in an invention embodiment;
Figure 4 is a flowchart showing steps in a set-up phase of a system according to an invention embodiment;
Figure 5 is a schematic view of generation of behavioural rules for agents;
Figure 6 is a schematic view of a monitoring phase;
Figure 7 is a schematic view of a simulation phase;
Figure 8 demonstrates a refinement process between prediction of weather events and the events taking place;
Figure 9 is an illustration of uncertainty in predictions;
Figure 10 is a diagram of a suitable computer apparatus providing the system of invention embodiments; and
Figure 11 is a schematic view of an update cycle.

Invention embodiments provide a method and apparatus for improved prediction of demand for goods and services, so contributing to supply chain optimization overall. Embodiments of the invention can combine weather predictions with agent behavioural simulations to predict demand, for example for weather-dependent goods and services with a relatively short lead time (e.g. up to 10 days). The technological fields are technical computing as required by weather simulation, agent-based simulation, data analytics, inventory management and supply chain control.

A system for predicting demand using historical data is described in US 2008/0154693 and a refinement to use weather data specifically in US2011/0004510. In these disclosures, a regression process is performed to generate a model for sales as a function of weather variables. Weather forecasts are processed using the regression model to provide predictions of the demand. An accurate demand prediction should include the characteristics (e.g. relative sensitivity to weather) of the population. Taking account of variation across the population of clients (for example in different regions) would be difficult in the approaches currently known in the art, and specifically in the teachings of these two prior art documents.

Historical sales data is a component of the system of invention embodiments, but instead of being used to directly generate the prediction itself, historical weather and sales data are used as input for an analytical system which will determine the rules by which agents in an agent-based simulation (where the agents represent the clients) will operate.

Although it is recommended that the operator organization make use of their own historical data to train the agents, the system of invention embodiments can include a library of agent rules for particular scenarios (e.g. particular products in particular regions), which the provider of the system has set up in the system in advance using, e.g. publicly available sales data. The availability of a library of pre-existing agent rules is an advantageous feature in the invention embodiments.

The agent-based simulation can use the rules derived by the analytics system and/or selected from the system library to provide demand predictions. Weather predictions can trigger the running of the agent-based simulation when necessary, as well as provide driving conditions to the agent-based simulation itself.

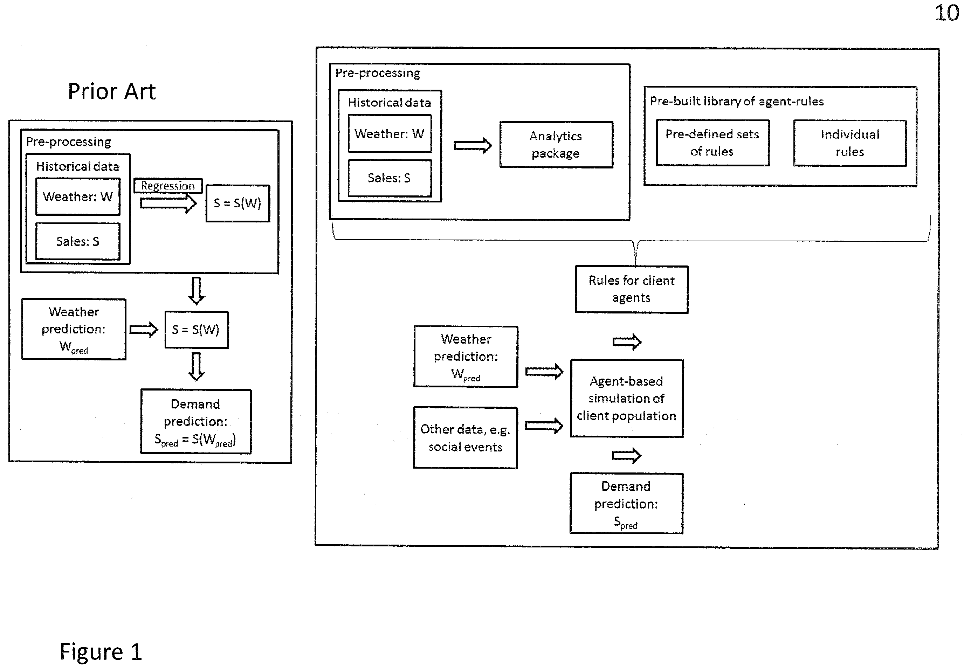

A process of refinement of the demand prediction is possible as the lead time of the weather forecasts decreases. The main components of the system suggested in this proposal are compared with those in the approach of the prior art documents mentioned above are illustrated in Figure 1.

Figure 1 is a high level comparison of the prior art with a system, 10, according to invention embodiments. The left panel sketches the steps used in the approach of US2011/0004510 as explained above, in which a model S =S(W) is developed from historical sales and weather data by regression and coupled with weather prediction W_{pred} to give a demand prediction S_{pred}= S(W_{pred}).

The right panel shows the steps in the approach suggested in an invention embodiment. The steps include pre-processing of the historical data using an analytics package or module. The right-hand box in the panel on the right indicates a pre-built library of rules for weather-dependent agent behaviour. These two components together can be used (usually in conjunction with operator input) to make agent behaviour rules for the specific simulation. The pre-built library of rules for weather-dependent agent behaviour is novel; the components indicated in double outlining also do not appear in the prior art. These are the analytics package, the rules for client agents, the agent-based simulation and the possible incorporation of other data which is not weather-prediction data. Although the focus here is the influence of weather events on demand, in the system of invention embodiments, external drivers other than the weather (e.g. upcoming social events, perhaps occurring at short notice) can be incorporated into the agent-based simulation, for example as it is running.

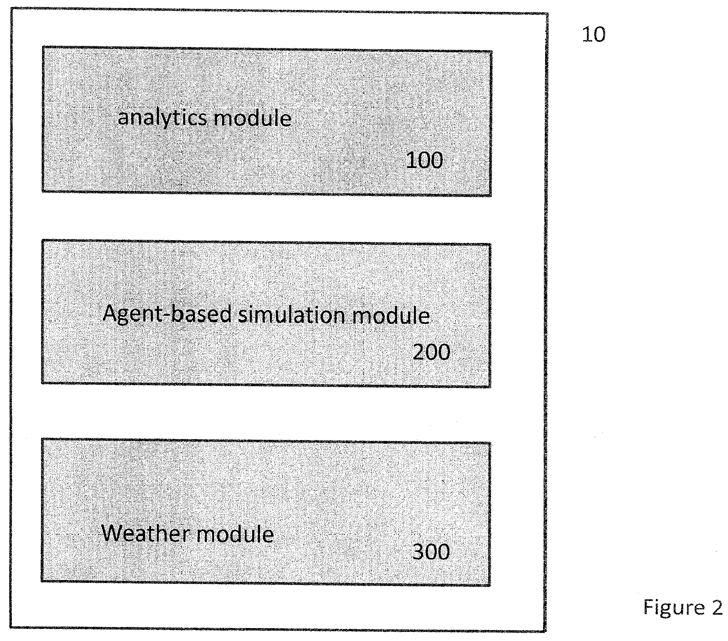

Figure 2 is a top-level overview of modules in the invention embodiments. The system 10 can be broken down functionally into an analytics module 100, an agent-based simulation module 200 and a weather module 300. The analytics module takes in data and generates agent rules, probably taking operator input into account. The rules are used during simulation using the simulation module. The weather module triggers the simulation by comparing the predicted weather with the rules (and it may also provide the weather forecasts for use in the simulation).

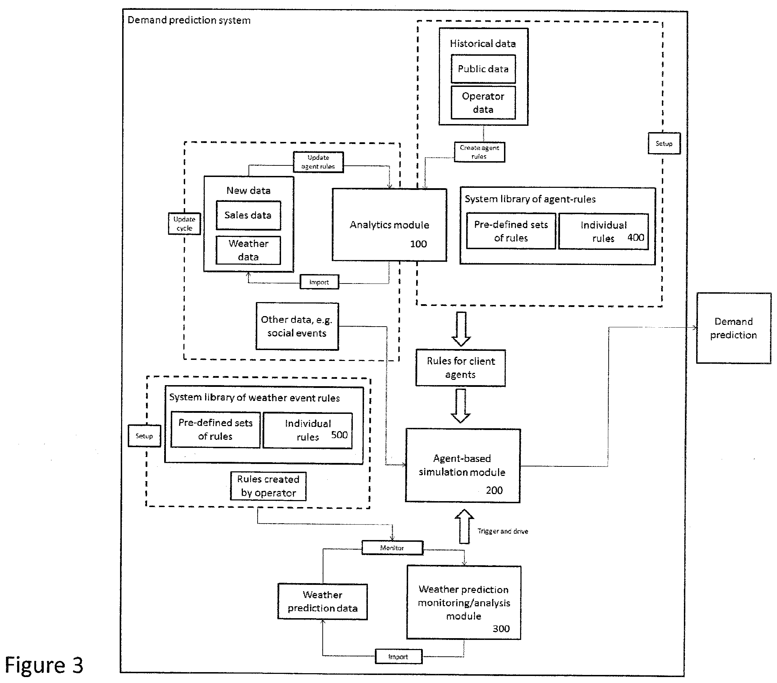

Figure 3 shows major modules and data flows in a prediction system according to an invention embodiment. The three main modules are again the analytics module 100, the agent-based simulation module 200 and the weather module 300. Data pulled into the system are shown as Historical data (including public data and operator data), New data (Including Sales data and Weather data - which is actual weather data), Weather Event (triggering) Rules created by the operator and Weather prediction data. Data generated by the system are the Rules for client agents and Demand prediction. There are two libraries of data (or databases), the System library of agent rules 400 and the System library of weather event rules 500.

The Rules for client agents (or more simply agent rules) are affected by two processes with relevant data and rules shown within dotted lines: (i). Setup, where an initial set of rules is obtained, either via selection from the library provided with the system, or by analysis of historical information provided by the operator; and (2). The update cycle, in which predicted data is compared with measured data as the system is run.

The weather prediction module 300 is responsible for pulling in weather prediction data and comparing it with a set of weather event rules. When the prediction matches an event, a trigger signal is sent to the agent-based simulation module 200. This then generates an updated prediction for the demand. The set of weather rules in operation is primarily input during the setup phase, where the operator can select rules from the library provided with the system, or create relevant rules as desired. Selection of the set of weather rules is facilitated by this library of weather events (for example sorted by sector, product type and region), which is a novel element of this invention embodiment. During the update cycle, additional information, e.g. regarding social events, can be assimilated.

### The setup phase

The setup phase need only be performed once when the system is started. The objective of the setup phase is to provide two types of data: firstly the data required by the system in order for it to run (agent rules), and secondly settings data (weather event rules) specifying the manner in which the system should be run. Some of the data may be related to the preferences of the operator, the remainder will be used in developing the analytics required to generate behaviour rules for the agents representing the population of clients.

Several categories of data may be used, including:
1. Regions of interest (i.e. client locations).
2. Agent rules characterising the clients (see below).
3. Lead-time(s) at which the system will operate. Several factors can influence the lead-time, e.g. the reliability and availability of the weather predictions, and flexibility in supply chain (i.e. how quickly goods can be moved to clients, or raw materials provided by upstream suppliers). Recommended settings should be suggested by the system, depending on the source of the weather predictions being used, and any other relevant factors.
4. Criteria characterizing weather events of interest (see below).

To run the system, the set of agent rules are needed. The following methods can be used to obtain them:
1. The operator can select from a pre-existing library of agent rules, possibly developed using publicly available data, e.g. national/regional sector sales data as available from national statistics bureaus. The sets of agent rules will be categorized by sector/product/region.
2. The operator can load into the system their own historical sales figures. Here the system should facilitate the automatic incorporation of available weather data (this might be downloaded on the fly from public or other sources, or loaded from a pre-existing database provided with the system).
3. The operator can choose to combine historical data in their possession with rules from the system-provided library.

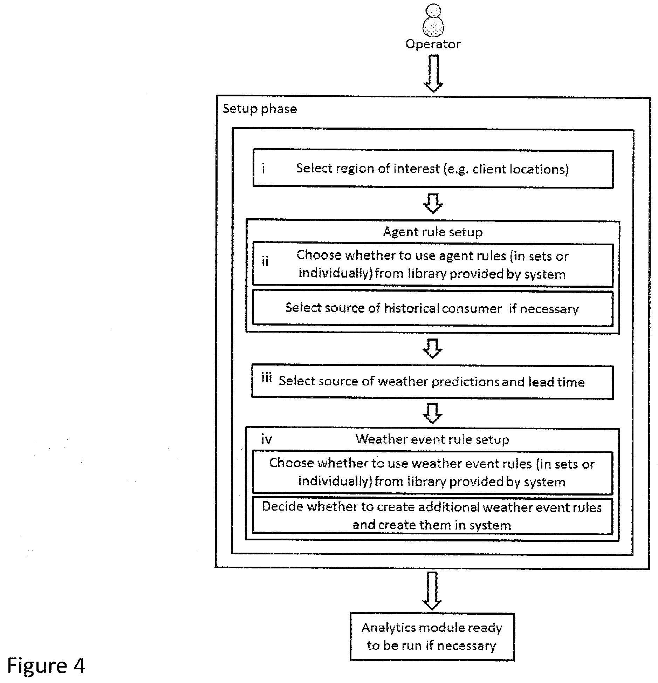

The set of selection steps in the Setup phase is illustrated in Figure 4. The operator: (i). Selects the geographical region(s) of interest; (ii). Chooses how the agent behavioural rules will be obtained (either by selecting sets and/or individual rules from the system-provided library, or using historical data in their possession, or a combination of the two); (iii). Chooses the source for acquisition of weather predictions; and the lead time; and (iv). Sets up rules for the weather events of interest (by choosing sets and/or individual rules from the system-provided library, and/or by creating their own rules). After this phase the analytics module is ready to be run for the agent behavioural rules to be generated.

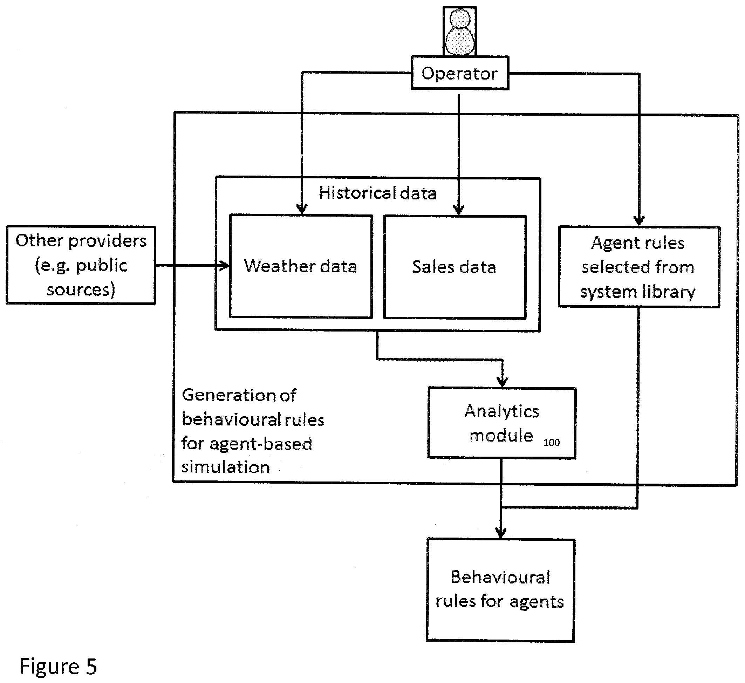

If the operator has chosen to include their own data to generate the agent rules, the analytics component will be run to determine the rules to be followed by the agents, as shown in Figure 5. In fact, the analytical module needs to be run to define the rules (if there is a need), irrespective of the source of the data. If a predefined set of agent rules could be used, in a particular situation, then there is no need to run the analytical module.

Figure 5 is an example of possibilities for generation of the agent behavioural rules (ii in Figure 4). The operator can decide whether to use rules from the system-provided library, and/or provide their own data for weather and sales to generate behavioural rules. If the user has their own weather data, they can opt to use it, although a more likely scenario is that weather data corresponding to the dates of the historical sales data would be automatically downloaded from a suitable source by the system.

The set of agent behavioural rules will be stored for later use, when the performance of an agent-based simulation is triggered by the monitoring of the weather forecast information.

Although the above description focuses on the weather dependence of the agents' behaviour, other non-weather-specific characteristics can be included in the rules governing their behaviour (e.g. response to advertising, promotions, etc.). The methodology (and hence the inputs in this setup stage) can also extend to incorporate other external data, including economic models and political or regulatory information and the pre-built library of agent rules could include rules governing agent responses to these types of events.

The operator can choose settings determining how weather forecasts should be obtained. The system will allow the operator to select publicly available data providers (e.g. national meteorological services, other third-party providers), or predictions generated in-house by the operator. If the interface for incorporating the operator's own predictions is used, the system should be able to automate the running of relevant Numerical Weather Prediction, NWP software for generating the predictions (although this is expected to be a fairly advanced use case).

A set of rules defining weather events of interest (which will generate trigger events for the agent-based modelling system described below) is required. To add this set of rules, the system may provide the following solutions:
1. The operator can select from a pre-existing library of trigger events developed by the provider of the system, or a set of such rules.
2. The operator can devise and enter their own rules defining weather events they would like the system to consider.
3. The operator can use a combination of rules from the system-provided library and rules of their own creation.

### The Monitoring phase

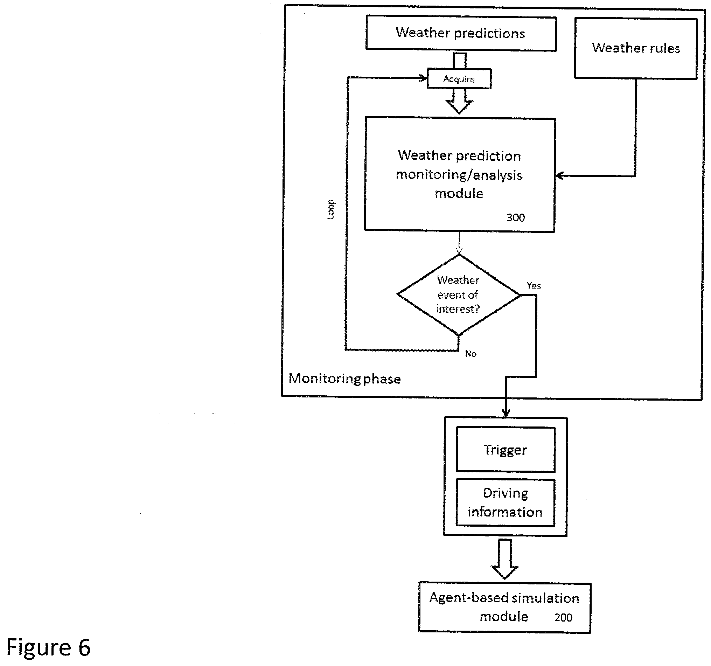

After setup, the system will enter the monitoring phase (illustrated in Figure 6). The weather forecast monitoring/analysis module 300 acquires weather forecasts from the source selected by the operator during the setup phase. The forecast is analysed for matches to events of interest according to the set of weather rules provided during setup. If no such event is found, the module waits to acquire the next forecast. If an event of interest is found, the module sends a trigger to the agent-based simulation module 200 to start a simulation (at the same time sending the information to drive the agent-based simulation).

In this part of the system processing, weather forecasts with the chosen lead-time(s) will be pulled into the system in the manner selected by the operator during the setup phase, and analysed.

Of interest will be "extreme" events: if a weather event of interest (as defined by the set of rules selected by the operator in the setup phase) is found in an incoming weather forecast, a trigger will be generated and sent to the agent-based simulation module. A rule describing a weather event generating a trigger in the monitoring phased might take the form "there is a probability of 80% or higher that the temperature in Scotland will be above 25 degrees Celsius". The trigger will cause the system to enter into the simulation phase.

During the monitoring phase, additional real time data, concerning e.g. social events occurring at relatively short notice, could be assimilated into the system. It is possible that these data could generate triggers causing the system to enter the simulation phase.

### The Simulation phase

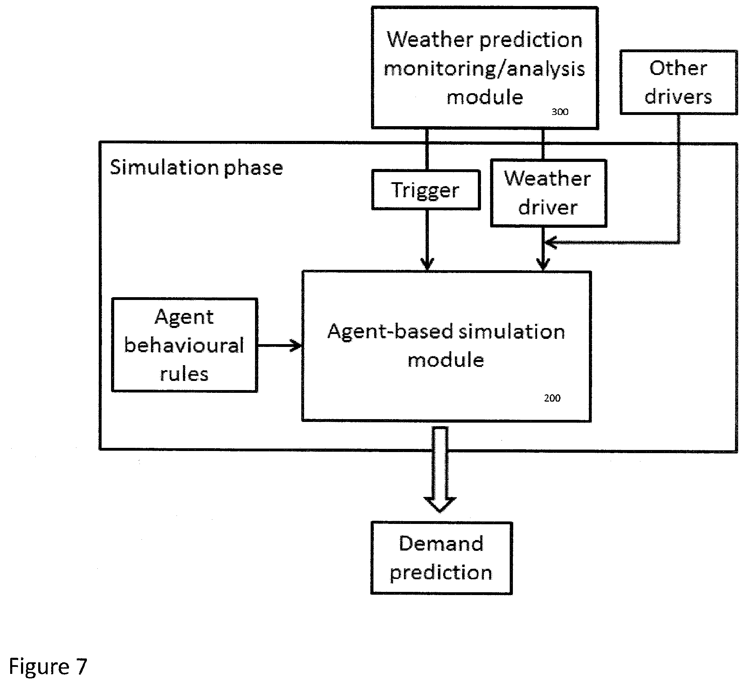

The trigger generated by the weather forecast monitoring/analysis module will cause the agent-based simulation module to perform an agent-based simulation in the simulation phase (illustrated in Figure 7). The weather forecast monitoring/analysis module has found a weather event of interest, and generated a trigger event, which causes the agent-based simulation module 200 to be activated for a simulation. The agent-based simulation module uses the current set of agent behavioural rules, and the weather driver information provided by the weather forecast analysis/monitoring module, together with any other drivers that may be present, to perform the agent-based simulation. The results of the agent-based simulation will be a prediction of the demand during the weather event, and potentially after the weather event. "Other drivers" shown to the top right of the diagram may include information on social and other events occurring at relatively short notice.

Hence, in addition to providing a trigger for the agent-based simulation to be performed, the weather prediction data will provide a driving condition to the agent based model (i.e. the agents respond to aspects of the weather conditions during the simulation of the event period such as temperature and levels of precipitation).

In performing the behavioural simulations, consideration of two types of agent may be envisaged in this embodiment. The first type will represent clients; the second will represent competitors to the operator's organization. In both cases, historical data can be used for deriving the behavioural rules obeyed by the agents as described above.

The output of the agent-based simulation module activated in the simulation phase will be a prediction of the demand for the product under study during the event, taking into account both client behaviour (for example increased purchases of an umbrella during a period of heavy rain) and competitor behaviour (for example, a shortage in supply of umbrellas).

Invention embodiments may consider a set of forecasts, e.g. one each day out to the maximum lead time being considered. For instance, if the maximum lead time is 10 days, there could be 10 predictions: one for tomorrow, one for the next day, etc., until the 10th day. The reliability of the weather predictions will increase as the lead time decreases. Once a weather event of interest has been flagged in the monitoring phase (presumably in the forecast with the maximum lead time), an agent-based simulation is triggered. For each subsequent day until the event is reached, an updated weather forecast can be obtained, and the agent-based simulation updated to reflect the new weather forecast.

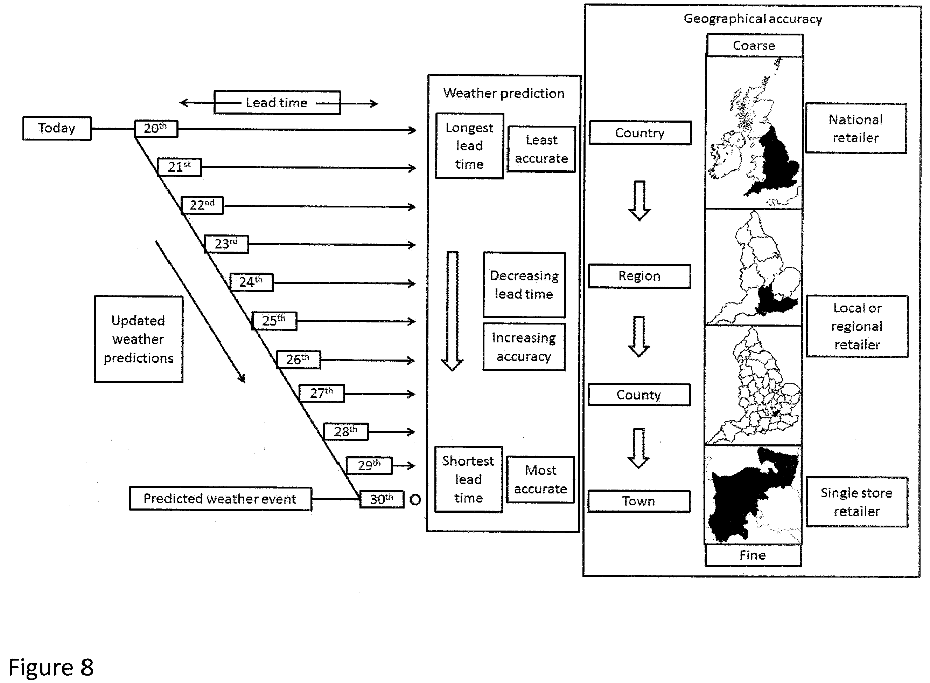

The process illustrated in Figure 8 relates to the process of prediction refinement between a weather event first appearing in a weather forecast to the event taking place. We start at the top and imagine that today is the 20th. With a maximum lead time of 10 days we predict an event of interest on the 30th. The event tells us at that stage that there will be increased demand by a distributor located in the southeast of England. This information may be used by the manufacturer (potentially in combination with information from simulations in other regions). As we move down, each day we have a new forecast with a shorter lead time, which may be relevant to a smaller region. As we move towards the bottom the geographical level of reliability moves through national, regional, county, and town levels. A possible correspondence between the geographical scale and the type of region is indicated on the right. The correspondence is shown for retailers, but applies equally to the full supply chain.

This means that the process shown in Figure 7 may sit inside a loop which is repeated several times between when a weather event of interest is first flagged by the observation phase, to the event actually occurring. This refinement process, whereby the agent-based model is updated as the weather forecasts are updated, can be thought of as corresponding to a process of regional refinement. The demand predictions made using the weather predictions having the longest lead-time could correspond to the distribution of demand across a country (which might be relevant for providing orders for the specific product to a country-wide manufacturer). As the event gets closer in time and the lead time of the forecasts decreases, the geographical scale over which the demand predictions are expected to be accurate will decrease, moving to say the level of regions (of interest to distributors for rescheduling product distribution) and then on shorter time scales still to individual towns and stores as the event approaches.

The scenario shown in Figure 8 would be relevant for a producer focusing on a single country, however the system would apply equally well to a producer supplying several regions in the world; in that case parallel versions of the system would run for each of the markets of interest, and trigger events would be possible for each. Sets of agents would allow modelling of the characteristics of clients within the different regions and demand figures could be combined and used for manufacturing logistics.

In preferred embodiments, the system will maintain a list of predicted events that are currently being monitored. The first time that a trigger for an event is generated by the weather prediction monitoring/analysis module, it will be added to the list of monitored events. When the event has occurred, it will be removed from the list of weather events being monitored.

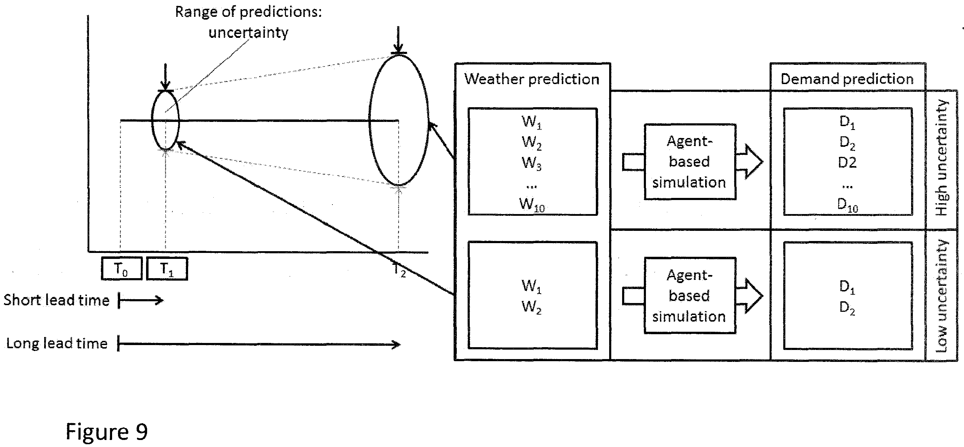

Each weather prediction will have an associated uncertainty: in general a weather prediction with a longer lead time will have a higher uncertainty. This uncertainty in the weather prediction will ultimately feed into a demand in the demand prediction resulting from the agent-based simulation. As the lead time of the weather predictions decreases, and the accuracy correspondingly improves, the accuracy of the demand prediction should increase. This refinement process, whereby the accuracy of the demand predictions increases in line with the increased accuracy of the weather prediction, is illustrated in Figure 9.

Figure 9 shows the uncertainty in predictions. The uncertainty is larger when the lead time of the prediction is longer, meaning the range of the prediction outcomes is larger; as the lead time decreases, so does the uncertainty in the prediction. The uncertainty in the weather forecasts filters through to uncertainty in the demand predictions. When the range of the weather predictions is larger, the range of the demand predictions is also larger.

### Additional points

An example of the type of behaviour the system should be able to take into account is a threshold such as the following. Above a certain temperature some consumers might decide to go on holiday to another area, so the number of consumers and correspondingly demand might be reduced in their original area, even if the temperature increases. The flexibility provided by agent-based simulation techniques should allow for this.

The system will be run on a computer system. One preferred architecture for the system would be a client-server arrangement. The operator would use a desktop (client) interface, such as a GUI to perform the setup stage using the server. The server would then perform the (ongoing) monitoring and simulation phases (when triggered). The operator should be able to monitor what tasks the server is executing by using the interface at any time, and perform any reconfiguration of the system as may be required (an expert operator may for instance want to modify or add new agent rules).

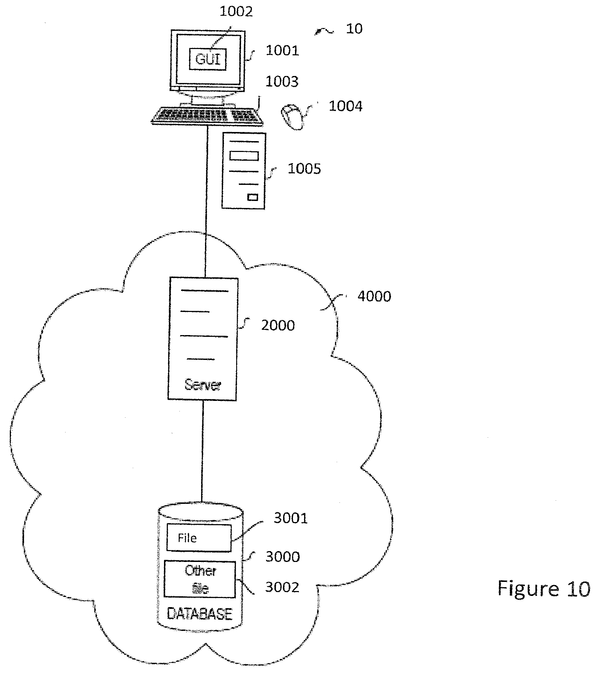

Figure 10 is a schematic diagram illustrating components of hardware that can be used with invention embodiments. In one scenario, the system 10 of invention embodiments can be brought into effect on a simple stand-alone PC or terminal shown in Figure 10. The terminal comprises a monitor 1001, shown displaying a GUI 1002, a keyboard 1003, a mouse 1004 and a tower 1005 housing a CPU, RAM, one or more drives for removable media as well as other standard PC components which will be well known to the skilled person. Other hardware arrangements, such as laptops, iPads and tablet PCs in general could alternatively be provided. The software for carrying out the method of invention embodiments as well as library data file(s) and any other file required may be downloaded, for example over a network such as the internet, or using removable media. Any modified file can be written onto removable media or downloaded over a network.

As mentioned above, the PC may act as a terminal and use one or more servers 2000 to assist in carrying out the methods of invention embodiments. In this case, any data files and/or software for carrying out the method of invention embodiments may be accessed from database 3000 over a network and via server 2000. The server 2000 and/or database 3000 may be provided as part of a cloud 4000 of computing functionality accessed over a network to provide this functionality as a service. In this case, the PC may act as a dumb terminal for display, and user input and output only. Alternatively, some or all of the necessary software may be downloaded onto the local platform provided by tower 1005 from the cloud for at least partial local execution of the method of invention embodiments.

While the system is in monitoring mode, the system of some invention embodiments can acquire new data. Being able to pull in additional data from other sources, especially in the case that agents represent competitors, might be important for instance in acquiring publicly available (i.e. online) data for promotions being offered by competitors. Furthermore, when new data is added, the agent behavioural rules can be updated accordingly. This would probably be more relevant if the system were being used by retailers or distributors rather than organizations at the producer level which we are primarily considering here.

There is a distinction between sales and demand. In applying analytics to generate the behavioural rules for the agents we are using historical sales information. If understocking had occurred, then sales data would only provide a lower bound for what the demand actually was (this is also true in the systems described in the art). Modern inventory management systems are likely to keep track of the times items were sold, so if understocking did occur, a *rate* of sales might allow estimates to be made of how many units would have been sold had the manufacturer not been understocked. This information can be incorporated into the system of invention embodiments and used for demand prediction which then becomes more accurate than would otherwise be the case.

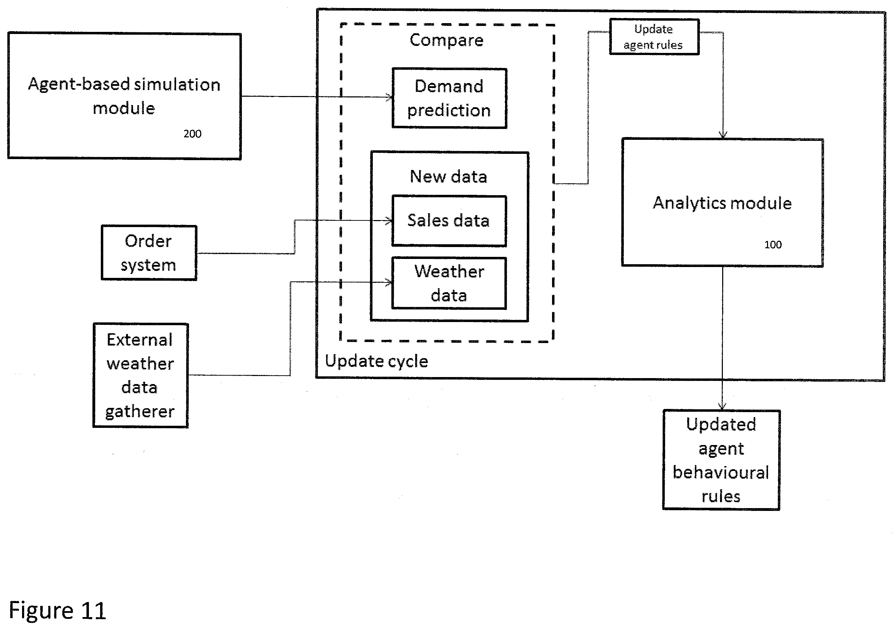

As the system is used and new weather and order data becomes available, this can be added to the system; this has been indicated as the "update cycle" in Figure 3 and is illustrated in more detail in Figure 11.

Figure 11 depicts use of the simulation module 200 and analytics module 100 in an update cycle. In this step, the data recorded on a particular day is compared with the prediction generated for that date. Any discrepancy between the value predicted by the system and that recorded on the day is used to update the agent rules, and the analytic module then updates the agent behavioural rules specific to the simulation. The intention is that the quality of the predictions produced by the system will improve as the system is used. The order system could be an external system for recording inventory levels. It may be the same order system to which the demand predictions from the simulation are fed. The external weather data gatherer obtains weather observations, most likely from an external public source.

### Applications

One area of application is in the logistics for the production of goods which exhibit weather-dependent demand, although the system would be useful to players across the supply chain.

Questions that can be answered by the prediction system of an invention embodiment might include:
- How many cooling fans should be produced for shipping to a distributor in London next week?
- How many pairs of woollen socks will a clothing retailer order for delivery in three days?
- What quantity of beer should be produced for shipping to a supermarket operating in the south of England for the coming weekend?

### Other Relevant Technological Fields

The system of invention embodiments could be applied to any resource distribution problem featuring a weather-dependence. As the system described in particular has a mechanism to signal impending extreme events, it would be useful in managing resource levels in preparation for and during the response to a weather-related disaster.

### Benefits of Invention Embodiments

Modelling of the clients as individuals can improve the accuracy of the predictions, and provide superior flexibility, especially across geographical regions. For instance, the rules describing the agents can be updated, and new rules can be added to the system easily.

A pre-built library of sector/product/region agent behavioural rules can allow producers to easily set up and start running the system to generate predictions. This can be especially beneficial to smaller producers whose in-house data may be less extensive, and/or whose in-house experience and manpower able to be devoted to developing sophisticated analytics may be limited. The same applies to the pre-built library of weather event rules when it is supplied as part of the system.

An important feature of some invention embodiments is the ability to ingest new data, which will allow improvement of the agent-based models as the system is used. This will allow the system to adapt to the specific characteristics of the clients supplied by the operator of the system.

### Summary of some Invention Embodiments

Embodiments can include a library of agent rules capturing the general weather-dependent ordering characteristics of clients, which has been developed by experts providing the system. The rules can be categorized by sector/product type/geographical region. The operator can use pre-existing sets of rules offered by the system, select combinations of individual rules from the library of their choosing, and choose to augment/update them with their own data as may be available.

Embodiments can provide a pre-built set of rules regarding weather events of relevance for product orders, for example categorized by sector/product type/geographical region. The operator can choose to use existing sets of rules offered by the system, choose individual rules from those provided, or construct rules of their own.

Embodiments can provide a system for generating product order predictions comprising the following components together:
A computer system for running the software components.
A software subsystem for selecting or generating sets of agent rules to take into account the weather-dependent behaviour of clients. This will consist of two parts:
   An interface to select rules and/or sets of rules from a pre-existing library of rules provided with the system categorized by sector/product type/geographical location.
   An interface to ingest historical sales data held by the operator and a supporting facility to obtain corresponding historical weather data if no weather data is provided by the operator, or such weather data is incomplete.
   An analytics module for generating agent behavioural rules in the case that the operator has chosen to incorporate their own data into the generation of the agent rules.

Embodiments can provide a subsystem to acquire weather forecasts in real time, in an ongoing fashion. As the predictions will generally be external to the operator organisation, this subsystem will likely be a network system to obtain data over the internet (e.g. using information available from national meteorological services such as the Met Office in the UK). This part of the system will incorporate an interface to select from public sources, together with an interface where the operator can add their own sources of weather information.

Embodiments can provide an agent-based simulation module which will use the rules (either selected from the pre-built library, or generated by the analytics module using the operators' chosen data, or a combination of both) to generate demand predictions, with thresholds corresponding to the lead-times of the weather forecasts being used in the system.

Embodiments can provide a software subsystem that will apply the weather rules defining relevant events to the weather forecast information obtained previously and upon determining a match to the specified rules, generate a signal that is passed to the agent-based simulation telling it to perform a simulation, as well as facilitating the transfer of required information from the weather prediction to the agent-based simulation system.

## Claims

1. An agent-based demand prediction system for generating weather-dependent product demand predictions using agent-based modelling in which the clients for the product are the agents, the system comprising:
an analytics module arranged to select and/or generate agent behaviour rules based on historical data relating to weather-dependent product acquisition by client agents;
a weather module arranged to acquire weather forecasts in real time and to access pre-defined weather event rules; and
an agent-based simulation module arranged to use the agent behaviour rules and weather forecasts to simulate agent behaviour and generate product demand predictions; wherein
the weather module is arranged to compare the acquired weather forecasts with the pre-defined weather event rules, and trigger a simulation in the agent-based simulation module based on a match between an acquired weather forecast and a pre-defined weather event rule.

2. A system according to claim 1, further comprising an agent rule library of pre-existing agent rules from which the analytics module is arranged to select agent behaviour rules, the agent rule library preferably including client agent product acquisition behaviour which varies geographically.

3. A system according to claim 2, wherein the agent rule library includes competitor agent rules based on historical data related to weather dependent behaviour of competitors and wherein the simulation takes competitor agent behaviour rules into account.

4. A system according to any of the preceding claims, further comprising a weather event library of weather event rules accessed by the weather module, the weather event library preferably including weather events rules which vary geographically.

5. A system according to any of claims 2 to 4, wherein the agent rule library and/or the weather event library are divided by industry sector and/or product type and/or geographical region.

6. A system according to any of the preceding claims, wherein the agent-based simulation module is arranged to use other upcoming event data as an input in the simulation and wherein the agent behaviour rules include the effect of the other upcoming event on client agent behaviour.

7. A system according to any of the preceding claims, further including an operator interface arranged to allow operator input in a set-up phase in which the operator can optionally select pre-existing agent rules and/or enter operator historical demand data to train the analytics module and create new agent rules for use in an execution phase and preferably wherein the system is arranged to automatically incorporate corresponding recorded weather conditions with the operator historical data.

8. A system according to any of the preceding claims, wherein the operator interface is arranged to allow operator input in a set-up phase in which the operator can optionally select pre-existing weather event rules and/or devise operator weather event rules.

9. A system according to any of the preceding claims, wherein the operator interface is arranged to additionally allow input of client agent locations and/or wherein the operator interface is arranged to additionally allow lead times for system operation based on reliability of the weather forecasts used.

10. A system according to claim 9, wherein the system is arranged to provided suggested lead times in dependence upon the source of the weather forecasts and any other relevant factors.

11. A system according to claim 10, which is arranged to provide a monitoring phase, in which the weather module repeatedly monitors weather forecasts with the selected lead time, until the simulation is triggered.

12. A system according to any of the preceding claims, wherein the analytics module is arranged to update the agent behaviour rules based on a combination of recorded weather data and recorded demand data collected during system operation and compared with predicted product demand.

13. A system according to any of the preceding claims, wherein the agent-based simulation module is arranged to execute the triggered simulation on a periodic basis after it is first triggered, including an updated weather forecast as an input in each subsequent execution.

14. A system according to any of the preceding claims, wherein the product demand predictions are used to adjust real time production and/or distribution of the product preferably by direct input of the product demand predictions into logistics software to adjust the product supply.

15. An agent-based demand prediction method for generating weather-dependent product demand predictions using agent-based modelling in which the clients for the product are the agents, the method comprising:
selecting and/or generating agent behaviour rules based on historical data relating to weather-dependent product acquisition by client agents;
acquiring weather forecasts in real time and accessing pre-defined weather event rules; and
using the agent behaviour rules and weather forecasts to simulate agent behaviour in an agent-based simulation module and generate product demand predictions; wherein the method further comprises
comparing the acquired weather forecasts with the pre-defined weather event rules, and triggering a simulation in the agent-based simulation module based only on a match between an acquired weather forecast and a pre-defined weather event rule.
